Europäisches Patentamt

European Patent Office

Office européen des brevets

(11) Numéro de publication : **0 169 084
B1**

# FASCICULE DE BREVET EUROPÉEN

(45) Date de publication du fascicule du brevet :
27.07.88

(51) Int. Cl.⁴ : **G 05 D 7/01, B 62 D 5/06**

(21) Numéro de dépôt : **85400900.8**

(22) Date de dépôt : **09.05.85**

(54) **Dispositif de régulation de l'alimentation d'un circuit hydraulique en fluide sous pression.**

(30) Priorité : **23.05.84 FR 8408051**

(43) Date de publication de la demande :
**22.01.86 Bulletin 86/04**

(45) Mention de la délivrance du brevet :
**27.07.88 Bulletin 88/30**

(84) Etats contractants désignés :
**DE GB IT**

(56) Documents cités :
**US-A- 2 603 065**

(73) Titulaire : **BENDIX France
126, rue de Stalingrad
F-93700 Drancy (FR)**

(72) Inventeur : **Kervagoret, Gilbert
5, Impasse Nobleterre
F-95100 Argenteuil (FR)**

(74) Mandataire : **Timoney, Ian Charles Craig et al
Division Technique Service Brevets Bendix Europe
126, rue de Stalingrad
F-93700 Drancy (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention concerne un dispositif de régulation de l'alimentation en fluide sous pression d'un circuit hydraulique, notamment un circuit hydraulique d'un système de servodirection à centre ouvert d'un véhicule automobile, et plus particulièrement un dispositif de régulation du type comprenant un moyen de piston disposé à coulissement étanche dans un alésage d'un boîtier et divisant celui-ci en une première chambre, reliée à la source de pression par un premier conduit, et une seconde chambre, reliée à la source de pression par un deuxième conduit raccordé au premier conduit par une restriction et à un circuit hydraulique par une ligne d'alimentation, un ressort, disposé dans la seconde chambre et sollicitant le moyen de piston dans la direction tendant à réduire le volume de la première chambre, et un moyen de clapet de décharge, couplé au moyen de piston et actionnable, à l'encontre du ressort, pour sélectivement, dériver une partir du fluide sous pression en provenance de la source de pression vers une bâche.

Un dispositif de ce type est décrit dans le document US-A-2 603 065. Dans ce document, le dispositif de régulation en question est un régulateur de débit permettant d'éviter les à-coups dans le circuit hydraulique aval dus aux variations de rotation du moteur thermique entraînant la pompe constituant la source de pression. Le moyen de clapet de décharge est actionné en fonction de la différentielle de pression statique entre la première et la seconde chambre qui est fonction du carré du débit du fluide traversant la restriction, lequel débit est lui-même proportionnel à la vitesse du moteur d'entraînement de la pompe formant la source de pression.

Quoique un tel dispositif permette une régulation adéquate du débit dans le circuit hydraulique d'utilisation, il demeure des cas de figures où la pression délivrée au circuit hydraulique d'utilisation est élevée et où la vitesse de rotation de la pompe est également élevée, ce qui se traduit par une puissance consommée Pc importante (Pc étant le produit du débit par la pression), et le débit bi-passé par le dispositif de régulation de débit l'est en pure perte.

La présente invention a pour objet de proposer un dispositif de régulation permettant de limiter à une valeur prédéterminée la puissance consommée et susceptible d'être adapté aisément sur la plupart des circuits utilisateurs existants.

Pour ce faire, selon une caractéristique de l'invention, le moyen de clapet de décharge est disposé dans une troisième chambre du boîtier, communiquant en permanence avec la bâche et comportant un siège de clapet pour le moyen de clapet communiquant avec la ligne d'alimentation du circuit hydraulique d'utilisation.

Avec un tel agencement, la puissance consommée maximale Pcmax peut être déterminée en fonction uniquement du débit de fluide délivré par la source de pression, indépendamment de la pression de ce dernier, ce qui permet d'adapter aisément le dispositif de régulation aux différents circuits hydrauliques utilisateurs.

Selon un autre aspect de l'invention, le circuit hydraulique d'utilisation peut conserver un dispositif de régulation de débit et un clapet de décharge en surpression conventionnels.

D'autres caractéristiques et avantages de la présente invention ressortiront de la description suivante d'un mode de réalisation, donné à titre illustratif mais nullement limitatif, faite en relation avec les dessins annexés, sur lesquels :

— La figure 1 est une vue schématique d'un dispositif de limitation de puissance sur circuit hydraulique selon l'invention ; et

— La figure 2 est un graphe Pression/Débit montrant le domaine d'utilisation du circuit de la figure 1 avec le dispositif de limitation de puissance selon l'invention.

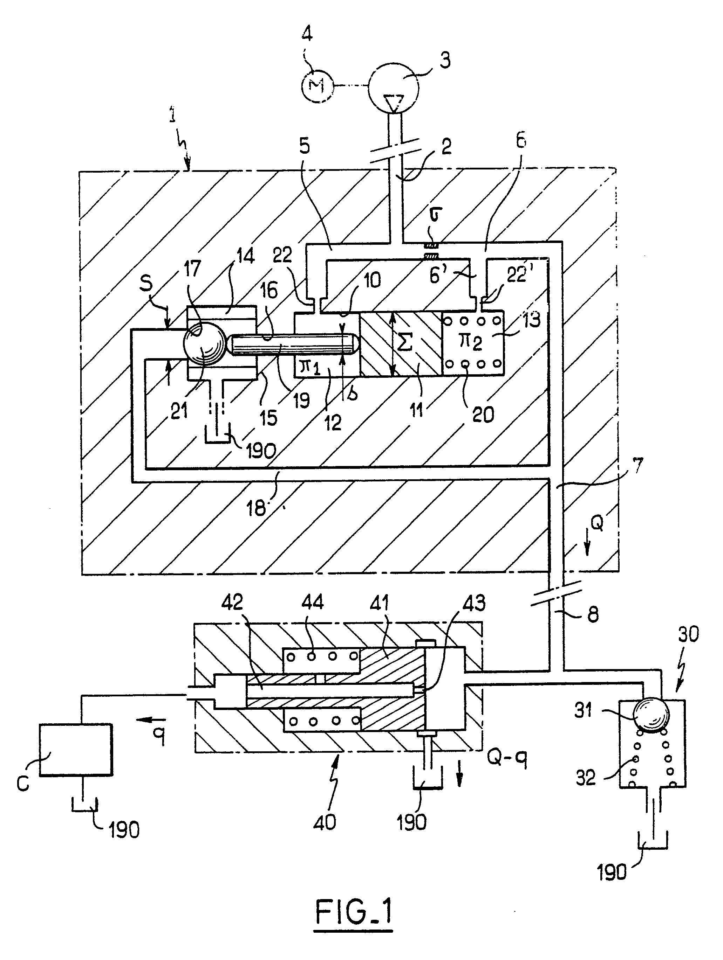

Comme représenté sur la figure 1, le dispositif de limitation de puissance sur circuit hydraulique selon l'invention comprend un boîtier, désigné généralement par la référence 1, comportant un conduit d'entrée 2 destiné à être relié à une source de pression 3 classiquement constituée par une pompe entraînée mécaniquement, par exemple par un système à poulies et à courroie, par le moteur thermique 4 d'un véhicule automobile. Dans le boîtier 1, le conduit d'entrée 2 se subdivise en un premier conduit intérieur 5 et en un second conduit intérieur 6 communiquant avec un conduit de sortie 7 destiné à être raccordé à une ligne d'alimentation 8 d'un circuit hydraulique d'utilisation, comme on le verra plus avant. Une restriction calibrée σ est ménagée dans la partie amont du second conduit 6, au voisinage du conduit d'entrée 2.

Dans le boîtier 1 est formé un alésage 10 dans lequel est monté à coulissement étanche un piston 11 qui divise ainsi l'alésage 10 en une première chambre 12 et une seconde chambre 13 séparées l'une de l'autre par le piston 11. Dans le boîtier 1 est également formée, dans le prolongement de l'alésage 10, une troisième chambre 14 séparée de la première chambre 12 par une cloison 15 formée avec un alésage de diamètre réduit 16, coaxial à l'alésage 10. Coaxialement à l'alésage 16, la paroi de la troisième chambre 14 opposée à la cloison 15 est formée avec un siège de clapet 17 communiquant, par une branche de conduit 18, avec le conduit de sortie 7.

Comme on le voit sur la figure 1, la troisième chambre 14 communique en permanence avec une bâche 190 tandis que la première chambre 12 communique en permanence avec le premier conduit intérieur 5, la seconde chambre 13 communiquant en permanence, via une branche de dérivation 6′, avec

2

le second conduit intérieur 6, en aval de la restriction σ. Dans la chambre 13 est disposé un ressort 20 sollicitant le piston 11 dans la direction vers la cloison 15. Une tige cylindrique 19, est montée à coulissement étanche dans l'alésage 16 de la cloison 15 et fait saillie d'une part dans la troisième chambre 14, et, d'autre part, dans la première chambre 12. La tige 16 coopère normalement en appui par ses extrémités respectives contre la face du piston 11 délimitant la première chambre 12 et, à l'opposé, contre une bille de clapet 21 guidée dans la troisième chambre 14 et susceptible de coopérer avec le siège 17. De préférence, pour assurer une meilleure stabilité en fonctionnement du dispositif, les conduits 5 et 6 communiquent avec les chambres respectives 12 et 13 par des restrictions fixes 22 et 22'.

Le piston 11 a une section efficace $\Sigma$, la tige 19 a une section efficace s et le siège de clapet 17 a une section efficace S. Selon un aspect de l'invention, on a $s < S < \Sigma$.

En fonctionnement normal du circuit hydraulique d'utilisation, la source de pression 3 débite, au travers du boîtier 1, un fluide sous pression avec un débit Q. La pression régnant dans la première chambre 12 et $\pi_1$ (correspondant sensiblement à la pression nominale fournie par la source de pression 3) tandis que, dans la seconde chambre 13 règne, du fait de la restriction σ, une pression $\Pi_2$, sensiblement identique à la pression régnant dans le conduit de sortie 7. Entre les pressions $\pi_1$ et $\pi_2$ on a la relation :

$$Q = K\sigma \sqrt{\pi_1 - \pi_2} \qquad\qquad (I)$$

En régime normal, du fait du choix des surfaces effectives des différents éléments de l'équipage mobile du dispositif et de la raideur F du ressort 20, la bille 21 est maintenue plaquée contre son siège 17 par la tige 19 et le piston 11.

Le seuil d'ouverture de la bille 21 est défini par la relation :

$$\pi_{2s} - \pi_{1s} + \pi_1 \Sigma - \pi_2, \quad \Sigma = F \qquad\qquad (II)$$

c'est-à-dire pour une pression $\pi_2$ telle que :

$$\pi_{2\,max} = \frac{F - \dfrac{Q^2}{K^2\sigma^2}(\Sigma - s)}{(S - s)} \qquad\qquad (III)$$

De cette façon, comme la puissance consommée maximale est

$$P_{c\,max} = \pi_{2\,max} \cdot Q \qquad\qquad (IV)$$

on a donc

$$P_{c\,max} = Q \cdot \frac{F - \dfrac{Q^2}{K^2\sigma} - (\Sigma - s)}{(S - s)} \qquad\qquad (V)$$

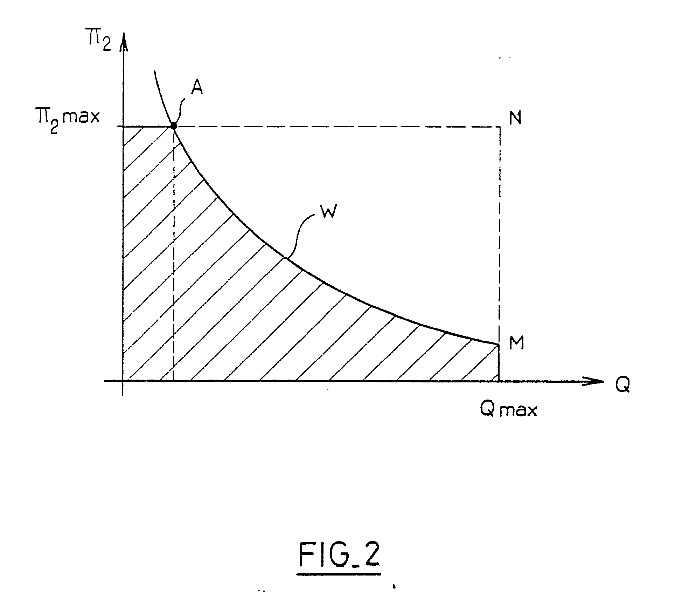

Dans le diagramme $\pi_2/Q$ de la figure 2, cette puissance consommée Pcmax est figurée par la courbe W. Si le circuit utilisateur est équipé classiquement d'un clapet de décharge de surpression 30 fixant la valeur $\pi_2$max d'utilisation, la zone hachurée au-dessous de la courbe W correspond au domaine d'utilisation avec le dispositif de limitation de puissance selon l'invention, alors que, sans ce dispositif de limitation de puissance, le domaine d'utilisation inclurait également la portion de quadrilatère ANM au-dessus de la courbe W (le débit Qmax étant déterminé par la vitesse maximale du moteur 4 d'entraînement de la pompe 3).

Sur le graphe de la figure 2, le point A est défini pour chaque type de circuit d'utilisation. Par exemple, pour des systèmes de servodirection de véhicules automobiles, on peut adopter les valeurs suivantes :

1. $\pi_2$max = 80 bars, pour un débit Qmini de 5 litres/minute
2. $\pi_2$max = 150 bars, pour un débit Q = 2,2 litres/minute, ou
3. $\pi_2$max = 60 bars, pour un débit Q = 7 litres/minute.

En se référant de nouveau à la figure 1, le circuit d'utilisation C, par exemple un système de servodirection de véhicule automobile, comprend une portion de circuit amont 8 raccordée au circuit 7 du dispositif de limitation de puissance selon l'invention, cette portion de circuit amont 8 incorporant un clapet de décharge de surpression 30 constitué classiquement d'un clapet à bille 31 normalement maintenu fermé par un ressort taré 32 et susceptible de s'ouvrir, pour une valeur de pression dans le circuit 8 excédent un seuil déterminé $\pi_2$max, pour dériver le fluide sous pression vers la bâche 190. La portion de circuit amont 8 du circuit d'utilisation comprend en outre classiquement un dispositif régulateur de débit 40 du type comprenant un piston étagé 41 formant tiroir de dérivation vers la bâche 19, pourvu d'un alésage central 42 muni d'une restriction d'entrée 43 et sollicité, dans la direction vers la fermeture du bi-passe vers la bâche 190 par un ressort 44. De cette façon, le débit du fluide hydraulique sous pression parvenant au système de servodirection C est un débit régulier q.

Quoique la présente invention ait été décrite en relation avec un mode de réalisation particulier, elle ne s'en trouve pas limitée, mais est au contraire susceptible de modifications et de variantes qui apparaîtront à l'homme de l'art.

**Revendications**

1. Dispositif de régulation de l'alimentation d'un circuit hydraulique (C) en fluide sous pression fourni par une source de pression (3), comprenant :
— un moyen de piston (11) disposé à coulissement étanche dans un alésage (10) d'un boîtier (1) et divisant celui-ci en une première chambre (12) reliée à la source de pression par un premier conduit (5) et une seconde chambre (13) reliée à la source de pression par un second conduit (6) raccordé au premier conduit par une restriction ($\sigma$) et au circuit hydraulique d'utilisation par une ligne d'alimentation (8),
— un ressort (20), disposé dans la seconde chambre (13) et sollicitant le moyen de piston (11) dans la direction tendant à réduire le volume de la première chambre (12) ; et
— un moyen de clapet de décharge (21) couplé au moyen de piston (11) et actionnable, à l'encontre du ressort (20) pour dériver sélectivement une partie du fluide sous pression en provenance de la source de pression vers une bâche (190),
caractérisé en ce que le moyen de clapet de décharge (21) est disposé dans une troisième chambre (14) du boîtier (1), communiquant en permanence avec la bâche (190) et comportant un siège de clapet (17) pour le moyen de clapet (21) communiquant avec la ligne d'alimentation (8).

2. Dispositif selon la revendication 1, caractérisé en ce que le moyen de clapet (21) est couplé au moyen de piston (11) par une tige (19), co-axiale à l'alésage (10), traversant à coulissement étanche une cloison (15) du boîtier (1) séparant la première chambre (12) de la troisième chambre (14).

3. Dispositif selon la revendication 2, caractérisé en ce que le siège de clapet (17) a une section (S) inférieure à la section ($\Sigma$) du moyen de piston (11).

4. Dispositif selon la revendication 2 ou la revendication 3, caractérisé en ce que la tige (19) a une section (s) inférieure à celle (S) du siège de clapet (17).

5. Dispositif selon l'une des revendications précédentes, caractérisé en ce que la ligne d'alimentation (8) comporte un clapet de décharge en surpression (30).

6. Dispositif selon l'une des revendications précédentes, caractérisé en ce que la ligne d'alimentation (8) comporte une valve de régulation de débit (40).

**Claims**

1. Device for regulating the supply of a hydraulic circuit (C) with fluid under pressure delivered by a source of pressure (3), incorporating :
— a piston means (11) situated so as to slide and to be sealed in a bore (10) of a casing (1) and dividing the latter into a first chamber (12) joined to the source of pressure through a first conduit (5) and a second chamber (13) joined to the source of pressure through a second conduit (6) connected to the first conduit through a restriction ($\sigma$) and to the operating hydraulic circuit through a supply line (8),
— a spring (20), situated in the second chamber (13) and pushing the piston means (11) in the direction tending to reduce the volume of the first chamber (12) ; and
— a discharge valve means (21) coupled to the piston means (11) and capable of being actuated, against the spring (20) so as to divert selectively a portion of the fluid under pressure coming from the source of pressure towards a reservoir (190),
characterized in that the discharge valve means (21) is situated in a third chamber (14) of the casing (1) in permanent communication with the reservoir (190) and incorporating a valve seat (17) for the valve means (21) communicating with the supply line (8).

2. Device according to Claim 1, characterized in that the valve means (21) is coupled to the piston means (11) by a rod (19), coaxial with the bore (10), passing through a bulkhead (15) of the casing (1) so as to slide and to be sealed, the bulkhead (15) separating the first chamber (12) from the third chamber (14).

3. Device according to Claim 2, characterized in that the valve seat (17) has a cross-section (S) which is smaller than the cross-section ($\Sigma$) of the piston means (11).

4. Device according to Claim 2 or Claim 3, characterized in that the rod (19) has a cross-section (s) which is smaller than that (S) of the valve seat (17).

5. Device according to one of the preceding claims, characterized in that the supply line (8) incorporates a pressure relief discharge valve (30).

6. Device according to one of the preceding claims, characterized in that the supply line (8) incorporates a flow regulating valve (40).

4

**Patentansprüche**

1. Vorrichtung zur Regelung der Versorgung eines Hydraulikkreises (C) mit von einer Druckquelle (3) geliefertem Druckmittel, mit :
— einem Kolben (11), der abgedichtet gleitend in einer Bohrung (10) eines Gehäuses (1) angeordnet ist und diese in eine erste Kammer (12) und eine zweite Kammer (13) unterteilt, von denen die erste Kammer mit der Druckquelle durch eine erste Leitung (5) und die zweite Kammer mit der Druckquelle durch eine zweite Leitung (6) verbunden ist, die an der ersten Leitung durch eine Drosselstelle ($\sigma$) und mit dem hydraulischen Verbraucherkreis durch eine Speiseleitung (8) angeschlossen ist,
— einer Feder (20), die in der zweiten Kammer (13) angeordnet ist und den Kolben (11) in eine Richtung im Sinne einer Volumenverringerung der ersten Kammer (12) vorspannt ; und
— einem Ablaßventilteil (21), das mit dem Kolben (11) gekoppelt ist und entgegen der Wirkung der Feder (20) betätigbar ist, um wahlweise einen Teil der von der Druckquelle kommenden Druckflüssigkeit zu einem Reservoir (190) abzuleiten,
dadurch gekennzeichnet, daß das Ablaßventilteil (21) in einer dritten Kammer (14) des Gehäuses (1) angeordnet ist, die dauernd mit dem Reservoir (190) in Verbindung steht und einen Ventilsitz (17) für das Ventilteil (21) aufweist, der mit der Versorgungsleitung (8) in Verbindung steht.

2. Vorrichtung nach Anspruch 1, dadurch gekennzeichnet, daß das Ventilteil (21) mit dem Kolben (11) durch eine Stange (19) gekoppelt ist, die koaxial zu der Bohrung (10) abgedichtet gleitend eine Trennwand (15) des Gehäuses (1) durchdringt, welche die erste Kammer (12) von der dritten Kammer (14) trennt.

3. Vorrichtung nach Anspruch 2, dadurch gekennzeichnet, daß der Ventilsitz (17) einen Querschnitt (S) hat, der kleiner ist als der Querschnitt ($\Sigma$) des Kolbens (11) ist.

4. Vorrichtung nach Anspruch 2 oder 3, dadurch gekennzeichnet, daß die Stange (19) einen Querschnitt (s) hat, der kleiner ist als der (S) des Ventilsitzes (17).

5. Vorrichtung nach einem der vorhergehenden Ansprüche, dadurch gekennzeichnet, daß die Versorgungsleitung (8) ein Überdruck-Ablaßventil (30) aufweist.

6. Vorrichtung nach einem der vorhergehenden Ansprüche, dadurch gekennzeichnet, daß die Versorgungsleitung (8) ein Durchsatzregelventil (40) aufweist.

**FIG.1**

FIG_2